# FASCICULE DE BREVET EUROPEEN

(11) **EP 0 449 694 B1**
(45) Date de publication et mention de la délivrance du brevet: **07.01.1993**
(21) Numéro de dépôt: 91400689.5
(22) Date de dépôt: 14.03.1991
(51) Int. Cl.: B23H 7/26

(54) **Dispositif porte-électrodes pour usinage par électroérosion**
Elektrodenhaltervorrichtung zur elektroerosiven Bearbeitung
Electrode holder for electroerosive machining

(30) Priorité: 20.03.1990 FR 9003510
(43) Date de publication de la demande: 02.10.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Barthes, Claude Paul, F-91540 Mennecy (FR); Callet André Roger, F-75013 Paris (FR); Ptchelinseff, Johan Denis, F-94550 Chevilly Larue (FR)
(74) Mandataire: Berrou, Paul

(56) Documents cités:
- EP-A- 0 245 545
- US-A- 3 719 579

## Description

L'invention concerne un dispositif porte-électrodes pour usinage par électro-érosion.

FR-A-1 304 170 décrit des perfectionnements apportés à l'équilibrage d'un équipage mobile supportant une électrode-outil qui au cours de son déplacement usine une pièce en matériau métallique électro-conducteur par électro-érosion, selon le principe connu de décharges électriques intermittentes entre électrode et pièce. EP-A-0 144 616 montre également une électrode d'usinage et un porte-électrode reliés par un montage à tiges et à douilles.

Certaines applications du procédé d'usinage par électro-érosion comportent notamment le perçage d'une multitude de trous dans une pièce en utilisant simultanément un nombre correspondant d'électrodes fines du type aiguilles.

On connait ainsi par FR-A-2 165 361 un dispositif pour serrer et guider des électrodes très fines comportant une microgriffe de serrage à machoires. En outre, EP-A- 0 241 165 et EP-A- 0 248 509 décrivent une installation d'usinage par électro-érosion comportant des électrodes montées en cartouches interchangeables.

Ces solutions connues laissent subsister toutefois, lorsque de multiples électrodes, notamment proches les unes des autres, doivent être utilisées selon différentes configuration, des difficultés pour assurer dans un temps réduit un serrage simultané des électrodes préalablement réglées dans les positions spatiales recherchées, sans risque de porte-à-faux ou d'introduire des contraintes excessives dans les électrodes, susceptibles de provoquer des ruptures.
Un dispositif porte-électrodes répondant à ces conditions sans encourir les inconvénients des solutions connues antérieures est caractérisé en ce qu'il comporte un corps en un matériau électriquement conducteur dans lequel sont ménagés des trous de guidage et de positionnement des électrodes et comportant une cavité sur la face opposée à la face de sortie de la partie travaillante des électrodes, cavité dans laquelle prend place un bloc en matériau élastique déformable de rigidité adéquate, ledit bloc étant soumis à l'action de compression d'un piston déplaçable au moyen d'un dispositif de serrage et ledit bloc ainsi que l'embase du piston étant traversés par lesdites électrodes de manière à assurer le serrage simultané des électrodes au moyen dudit bloc isostatiquement compressé.
Avantageusement, le moyen de déplacement dudit piston est constitué par une vis de serrage reliée audit corps de porte-électrode avec interposition d'un élément transmetteur d'effort entre la tête de vis et le piston. Pour certaines applications particulières, des électrodes creuses avec injection de liquide diélectrique sont utilisées et dans ce cas le corps du porte-électrodes est coiffé d'une nourrice réalisant l'alimentation simultanée des électrodes.
D'autres caractéristiques et avantages de l'invention seront mieux compris à la lecture de la description qui va suivre d'un mode de réalisation du dispositif porte-électrodes conforme à l'invention, en référence aux dessins annexés sur lesquels :
- la figure 1 représente une vue, en coupe par un plan contenant la direction d'usinage, d'un dispositif porte-électrodes selon un mode de réalisation de l'invention ;
- la figure 2 représente une demi-vue de dessus schématique du porte-électrodes représenté sur la figure 1, montrant un exemple de répartition des électrodes pour une application particulière.

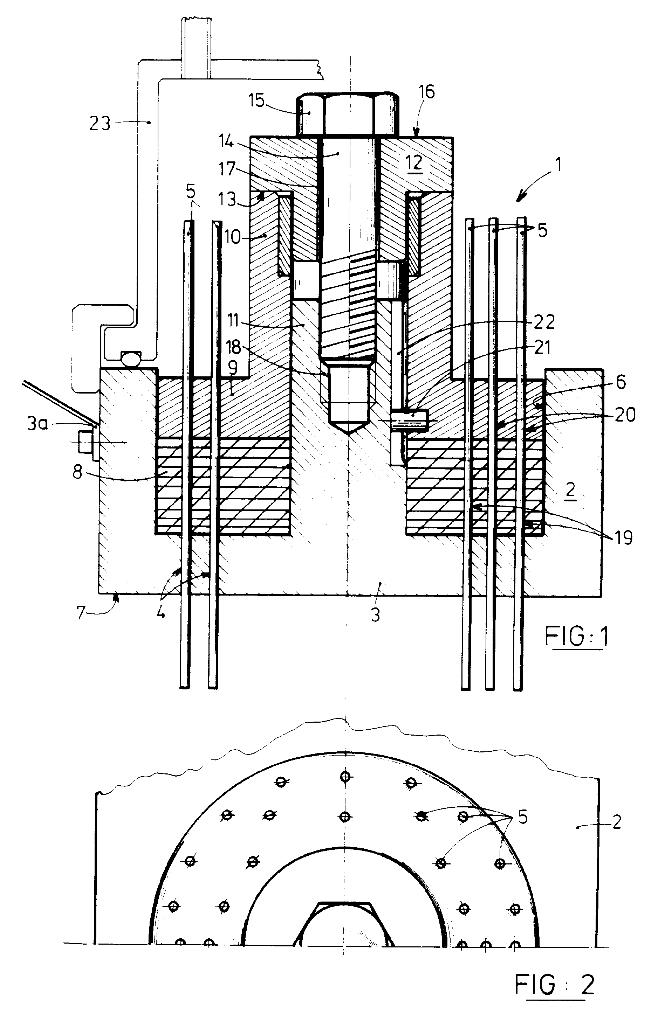

Un dispositif 1 porte-électrodes conforme à l'invention a été représenté sur les figures 1 et 2 dans le cas d'une application de multi-perçage par électro-érosion à une pièce de révolution axisymétrique, notamment destinée à un moteur aéronautique. Mais l'invention est également applicable à des dispositifs porte-électrodes utilisés pour l'usinage de pièces ayant d'autres formes géométriques, la disposition des électrodes et les formes générales du porte-électrode étant dans chaque cas adaptées à ces formes particulières.

Ledit porte-électrodes 1 comporte un corps 2 dans lequel sont ménagés au niveau d'une base 3 une multitude de trous traversants 4 destinés au guidage des électrodes 5 dont l'agencement peut être ordonné, comme dans l'exemple représenté sur la figure 2, ou quelconque. Les trous 4 sont réalisés avec une grande précision de manière à assurer d'une part le passage du courant électrique dans les électrodes 5 à partir d'une alimentation 3a amenant le courant au corps 3 et, d'autre part, la précision des perçages effectués par l'opération d'usinage par électro-érosion. Ledit corps 2 comporte une cavité 6 ménagée du côté opposé à la face 7 de sortie des électrodes 5. Dans l'exemple de réalisation représenté sur les figures 1 et 2, la cavité 6 a une forme de couronne annulaire. Dans la cavité 6 est mis en place au moyen de techniques connues de moulage et polymérisation un bloc 8 en matériau élastique déformable présentant toutefois une rigidité suffisante, notamment à l'état compressé. Un exemple de matériau utilisé est à base de résine silicone polymérisable à froid. Ledit bloc 8 est surmonté d'un élément formant piston 9 qui, dans l'exemple représenté, présente également une forme annulaire correspondant à la cavité 6. Le piston 9 comporte un élément creux formant tige 10 qui coiffe une partie centrale 11 qui est solidaire du corps 2. Ledit piston 9 est associé à son extrémité supérieure à un élément 12 transmetteur d'effort qui est placé en appui sur la face d'extrémité 13 de la tige 10 de piston.

Le dispositif est complété par une vis 14 de serrage dont la tête 15 est en appui sur la face supérieur 16 dudit élément 12 transmetteur d'effort traversé, au niveau d'un trou 17, pour venir visser dans un trou taraudé 18 ménagé sur ladite partie centrale 11 du corps 2.

Pour réaliser le moulage du bloc 8, les électrodes 5 sont mises en place et réglées en position, traversant les trous 4 du corps 2 et les trous de passage 20 correspondants ménagés dans le piston 9. Ledit piston 9 est ensuite remonté au dessus de la cavité 6 par coulissage de manière à permettre le remplissage de celle-ci avec un matériau élastique initialement à l'état liquide et dont la polymérisation forme le bloc 8 dans lequel sont ménagés les trous de passage 19 des électrodes 5. Le déplacement du piston est bloqué en rotation par un pion 21 coopérant avec une rainure 22 ménagée sur la partie centrale 11 du corps, de manière à éviter la mise en contrainte ou la rupture des électrodes 5. Lors du moulage, les électrodes sont prélablement enduites d'un produit anti-adhérent d'un type connu, adapté au matériau à couler, par exemple une graisse silicone.

Le fonctionnement du dispositif porte-électrodes qui vient d'être décrit en référence aux figures 1 et 2 est le suivant. Les électrodes 5 sont réglées en position traversant les trous 4 du corps 2 et les trous de passage correspondants 19 et 20 du bloc 8 et du piston 9. Le vissage de la vis 14 permet alors, par déplacement vertical du piston 9, une mise en pression isostatique du bloc déformable 8 dans lequel les dites électrodes 5 se trouvent en conséquence serrées par déformation de ce bloc 8.

Dans le cas d'une application imposant l'utilisation d'électrodes creuses, notamment pour la réalisation de perçage profonds, une injection simultanée de diélectrique est assurée à partir d'un dispositif 23 formant réservoir, fixé de manière étanche sur le corps 2 et constituant la nourrice d'alimentation des électrodes 5.

Aux avantages qui ont été précédemment notés, on ajoutera que le réglage indépendant des électrodes 5, avant leur serrage simultané permet facilement d'adapter la position des électrodes 5 à l'usinage d'une pièce présentant une surface courbe et à l'obtention de tout profil souhaité.

## Revendications

1. Dispositif porte-électrodes pour usinage par électro-érosion comportant un corps (2) dans lequel sont ménagés des trous (4) de passage des électrodes (5) et comportant une cavité (6) sur la face opposée à la face (7) de sortie de la partie travaillante des électrodes (5), cavité (6) dans laquelle est placé un bloc (8) en matériau élastique déformable de rigidité adéquate, ledit bloc (8) étant soumis à l'action de compression d'un piston (9) déplaçable au moyen d'un dispositif de serrage (12-15) et ledit bloc (8) ainsi que l'embase du piston (9) étant traversés par lesdites électrodes (5) de manière à assurer le serrage simultané des électrodes (5) au moyen dudit bloc (8) isostatiquement compressé.

2. Dispositif porte-électrodes selon la revendication 1 dans lequel le moyen de déplacement dudit piston (9) est constitué par une vis (14) de serrage reliée audit corps (2) de porte-électrode, avec interposition d'un élément (12) transmetteur d'effort entre la tête (15) de vis et le piston (9).

3. Dispositif porte-électrodes selon la revendication 2 dans lequel ledit bloc (8) placé dans la cavité (6) a une forme annulaire.

4. Dispositif porte-électrodes selon l'une quelconque des revendications 1 à 3 dans lequel ledit bloc (8) déformable est en un matériau à base de résine silicone.

5. Dispositif porte-électrodes selon l'une quelconque des revendications 1 à 4 dans lequel un réservoir (23) coiffant de manière étanche ledit corps (2) et formant nourrice alimente en liquide diélectrique les électrodes (5) qui sont creuses.

## Patentansprüche

1. Elektrodenhaltervorrichtung für die elektroerosive Bearbeitung, die einen Körper (2) aufweist, in dem Löcher (4) für den Durchtritt der Elektroden (5) angebracht sind und der auf der der Austrittsseite (7) des Arbeitsteils der Elektroden (5) entgegengesetzten Seite einen Hohlraum (6) besitzt, in dem ein Block (8) aus elastisch verformbarem Material geeigneter Steifigkeit angeordnet ist, der der Kompressionswirkung eines mit Hilfe einer Spannvorrichtung (12-15) bewegbaren Kolbens (9) ausgesetzt ist, wobei der Block (8) und der Sockel des Kolbens (9) von den Elektroden (5) durchdrungen werden, derart daß das gleichzeitige Einspannen der Elektroden (5) mit Hilfe des isostatisch komprimierten Blocks (8) gewährleistet ist.

2. Elektrodenhaltervorrichtung nach Anspruch 1, bei der das Mittel zum Bewegen des Kolbens (9) aus einer Spannschraube (14) besteht, die mit dem Elektrodenhalterkörper (2) unter Zwischenfügung eines Elements (12) zur Kraftübertragung zwischen dem Schraubenkopf (15) und dem Kolben (9) verbunden ist.

3. Elektrodenhaltervorrichtung nach Anspruch 2, bei der der in dem Hohlraum (6) angeordnete Block (8) Ringform hat.

4. Elektrodenhaltervorrichtung nach einem der Ansprüche 1 bis 3, bei der der verformbare Block (8) aus einem Material auf der Basis von Silikonharz besteht.

5. Elektrodenhaltervorrichtung nach einem der Ansprüche 1 bis 4, bei der ein Vorratsbehälter (23) vorgesehen ist, der den genannten Körper (2) dicht abdeckt und einen Verteilerbehälter zur Speisung der hohl ausgebildeten Elektroden (5) mit elektroerosiver Flüssigkeit bildet.

## Claims

1. Electrode holding device for machining by spark erosion comprising a body (2) in which are formed holes (4) for the passage of electrodes (5) and comprising a cavity (6) on the side opposite the face (7) through which emerge the working sections of the electrodes (5), cavity (6) in which is placed a block (8) of a deformable elastic material of adequate rigidity, the said block (8) being subjected to the compressive action of a piston (9) displaceable by means of a clamping device (12-15) and the said block (8) as well as the base of the piston (9) being traversed by the said electrodes (5) in such a way as to ensure the simultaneous clamping of the electrodes (5) by means of the said block (8) being isostatically compressed.

2. Electrode holding device in accordance with Claim 1 in which the means of displacement of the said piston (9) is constituted by a clamping screw (14) connected to the said electrode holder body (2), with the interposition of a thrust-transmitting element between the screw head (15) and the piston (9).

3. Electrode holding device in accordance with Claim 2 in which the said block (8) placed in the cavity (6) takes an annular shape.

4. Electrode holding device in accordance with any one of Claims 1 to 3 in which the said deformable block (8) is in a material with a silicon resin base.

5. Electrode holding device in accordance with any one of Claims 1 to 4 in which a tank (23) capping in a watertight manner the said body (2) and forming a supply manifold feeds a dielectric liquid to the electrodes (5) which are hollow.
